# EUROPEAN PATENT SPECIFICATION

(11) **EP 2 006 487 B1**
(45) Date of publication and mention of the grant of the patent: **11.07.2012**
(21) Application number: 07121299.7
(22) Date of filing: 22.11.2007
(51) Int. Cl.: F01D 5/14

(54) **Method of manufaturing CMC articles having small complex features**
Verfahren zur Herstellung von CMC-Artikeln mit kleinen komplexen Merkmalen
Procédé pour la fabrication d'articles en CMC dotés de petites caractéristiques complexes

(30) Priority: 28.11.2006 US 563800
(43) Date of publication of application: 24.12.2008
(73) Proprietor: GENERAL ELECTRIC COMPANY, Schenectady, NY 12345 (US)
(72) Inventor: Steibel, James Dale, Mason, OH 45040 (US); Carper, Douglas Melton, Trenton, OH 45067 (US); Subramanian, Suresh, Mason, OH 45040 (US); Whiteker, Stephen Mark, Covington, KY 41017 (US)
(74) Representative: Williams, Andrew Richard

(56) References cited:
- EP-A- 1 321 712
- EP-A- 1 555 391
- GB-A- 2 230 258
- US-A- 5 375 978
- US-A- 5 944 485
- US-A1- 2005 238 491

## Description

### FIELD OF THE INVENTION

The present invention relates generally to a method of manufacturing ceramic matrix turbine engine components, and more particularly, to a method of manufacturing a ceramic matrix composite gas turbine engine component having small complex features.

### BACKGROUND OF THE INVENTION

In order to increase the efficiency and the performance of gas turbine engines so as to provide increased thrust-to-weight ratios, lower emissions and improved specific fuel consumption, engine turbines are tasked to operate at higher temperatures. The higher temperatures reach and surpass the limits of the material comprising the components in the hot section of the engine. Since existing materials cannot withstand the higher operating temperatures, new materials for use in high temperature environments such as a turbine section of a gas turbine engine, need to be developed.

As the engine operating temperatures have increased, new methods of cooling the high temperature alloys comprising the combustors and the turbine airfoils have been developed. For example, ceramic thermal barrier coatings (TBCs) have been applied to the surfaces of components in the stream of the hot effluent gases of combustion to reduce the heat transfer rate, provide thermal protection to the underlying metal and allow the component to withstand higher temperatures. These improvements help to reduce the peak temperatures and thermal gradients of the components. Cooling holes have been also introduced to provide film cooling to improve thermal capability or protection. Simultaneously, ceramic matrix composites have been developed as substitutes for the high temperature alloys. The ceramic matrix composites (CMCs) in many cases provided an improved temperature and density advantage over metals, making them the material of choice when higher operating temperatures and/or reduced weight are desired.

A number of techniques have been used in the past to manufacture hot section turbine engine components, such as turbine airfoils using ceramic matrix composites. One method of manufacturing CMC components, set forth in U.S. Pat. Nos. 5,015,540, 5,330,854, and 5,336,350, incorporated herein by reference in their entirety and assigned to the assignee of the present invention, relates to the production of silicon carbide matrix composites containing fibrous material that is infiltrated with molten silicon, herein referred to as the Silcomp process. The fibers generally have diameters of about 140 micrometers (0.0055") or greater, which prevents intricate, complex shapes having features on the order of about 0.076cm (0.030 inches), such as turbine blade components for small gas turbine engines, to be manufactured by the Silcomp process.

Other techniques, such as the prepreg melt infiltration process have also been used. However, the smallest cured thicknesses with sufficient structural integrity for such components have been in the range of about 0.076cm (0.030 inch) to about 0.091cm (0.036 inch, since they are manufactured with standard prepreg plies, which normally have an uncured thickness in the range of about 0.023cm (0.009 inch) to about (0.028cm) 0.011 inch. With standard matrix composition percentages in the final manufactured component, the use of such uncured thicknesses results in final cured thicknesses in the range of about 0.076cm (0.030 inch) to about 0.091cm (0.036 inch) for multilayer ply components, which is too thick for use in small turbine engines having components requiring fine features.

Complex CMC parts for turbine engine applications have been manufactured by laying up a plurality of plies. In areas in which there is a change in contour or change in thickness of the part, plies of different and smaller shapes are custom cut to fit in the area of the contour change or thickness change. These parts are laid up according to a complicated, carefully preplanned lay-up scheme to form a cured part. Not only is the design complex, the lay-up operations are also time-consuming and complex. Additionally, the areas of contour change and thickness change have to be carefully engineered based on ply orientation and resulting properties, since the mechanical properties in these areas will not be monolithic. Because the transitions between plies along contour boundaries are not smooth, these contours can be areas in which mechanical properties are not smoothly transitioned, which must be considered when designing the part and modeling the lay-up operations.

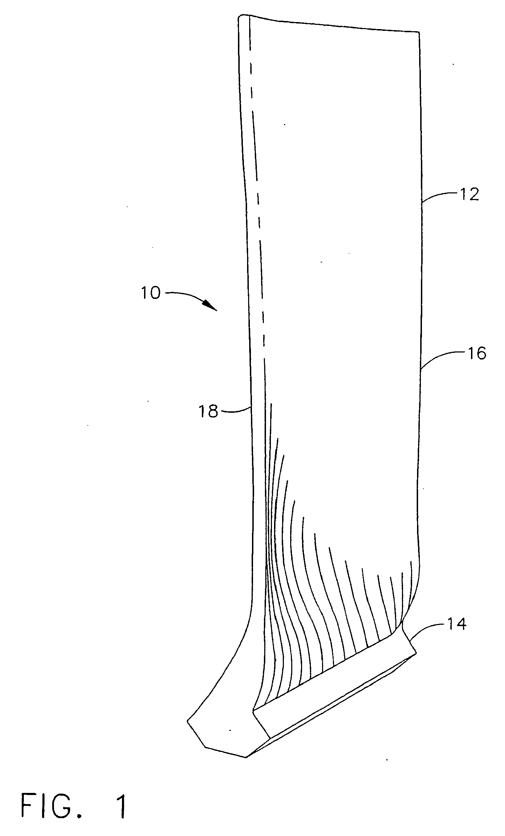

FIG. 1 depicts an exemplary uncoated airfoil (uncooled) 10. In this illustration the airfoil 10 comprises a ceramic matrix composite material. The airfoil 10 includes an airfoil portion 12 against which a flow of gas is directed. The airfoil 10 is mounted to a disk (not shown) by a dovetail 14 that extends downwardly from the airfoil portion 12 and engages a slot of complimentary geometry on the disk. The depicted airfoil 10 does not include an integral platform. A separate platform can be provided to minimize the exposure of the dovetail 14 to the surrounding environment if desired. The airfoil has a leading edge section 16 and a trailing edge section 18. Such a composite airfoil is fabricated by laying up a plurality of plies.

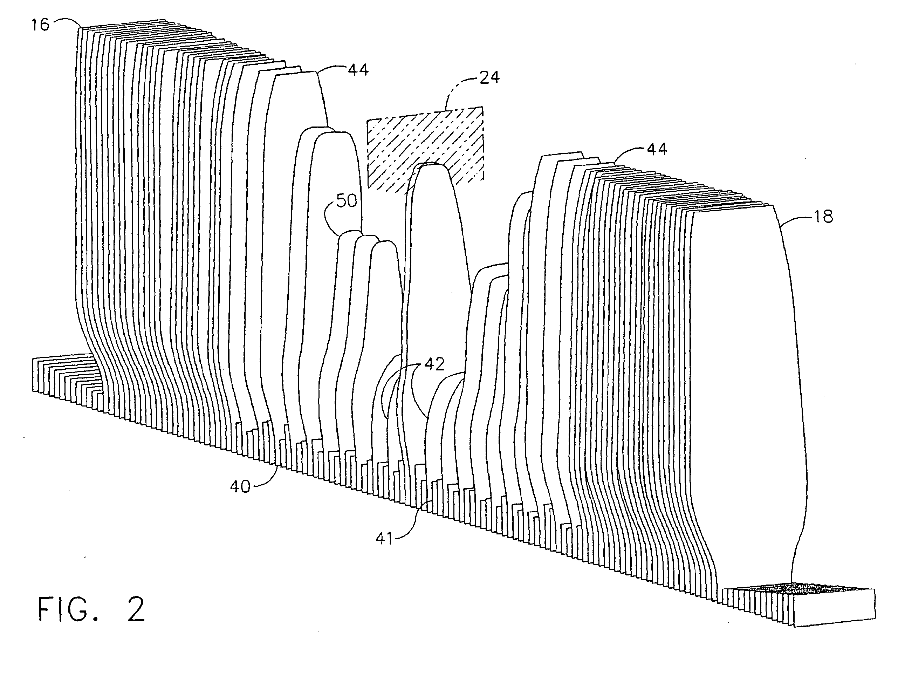

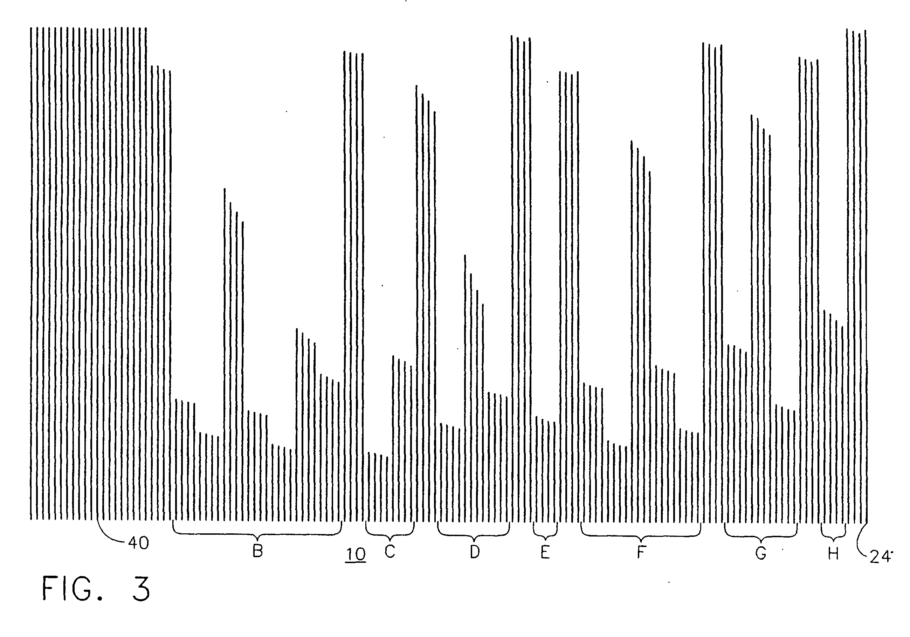

Figure 2 is a prior art illustration (perspective) of how such a composite airfoil has been laid up. Figure 3 represents a front view of the lay-up of these prepreg plies. The airfoil 10 comprises a plurality of prepreg plies 40 arranged around a center plane 24. There are a number of root (prepreg) plies 41 and smaller (prepreg) plies 42 arranged between larger (prepreg) plies 40, 44. The smaller plies, in particular root plies 41, are required to provide the dovetail geometry. In addition, each of the plies 40 includes tow that is oriented in a predetermined direction and embedded in a matrix material. Of course, care must be taken in modeling the airfoil to not only provide the proper size ply in the proper location, but also to properly orient the tow direction of each of the plies. Manufacture of the blade requires providing plies sized according to the model and properly assembled according to the model.

Still other techniques attempt to reduce the thickness of the prepreg plies used to make up the multi-layer plies by reducing the thickness of the fiber tows. Theoretically, such processes could be successful in reducing the ply thickness.

However, practically, such thin plies are difficult to handle during processing, even with automated equipment. Some common problems include wrinkling of the thin plies, a manufacturing defect that can result in voids in the article, and a deterioration of the mechanical properties of the article, and possible ply separation. In addition, problems arise as airfoil hardware requires the ability to form small radii and relatively thin edges. The high stiffness of the fibers, typically silicon carbide, in the prepreg tapes or plies, can lead to separation when attempting to form the plies around tight bends and corners with small radii. This leads to a degradation in the mechanical properties of the article in these areas with resulting deterioration in durability.

US 2005/0238491 discloses a ceramic matrix composite airfoil trailing edge arrangement wherein a filler material is installed during the lay-up process to fill a gap region between inner and outer plies.

What is needed is a method of manufacturing CMC turbine engine components that permits the manufacture of features having a thickness, particularly at the edges in the range of about 0.038cm (0.015 inch) to about 0.055cm (0.021 inch), as well as small radii, the radii also in the range of less than about 0.076cm (0.030 inches). In addition, a method of manufacturing CMC turbine engine components having features with a thickness less than about 0.055 cm (0.021 inch) is also needed.

### SUMMARY OF THE INVENTION

The present invention provides a method for producing a ceramic matrix composite component, comprising the steps of: modeling a ceramic matrix component that includes a combination of prepreg layers and a discontinuously reinforced composite insert, mixing material for the discontinuously reinforced composite insert said material being selected from the group consisting of chopped fiber, chopped tow, chopped prepreg plies and chopped plies; providing a plurality of prepreg layers; laying up the prepreg layers; applying the discontinuously reinforced composite insert material at contours, corners and at changes in the thickness of the component, adjacent to the prepreg layers; forming an assembly of prepreg layers and discontinuously reinforced composite insert material; curing the assembly under heat and pressure to form a ceramic matrix component.

Turbine components are modeled using discontinuously reinforced composite inserts in combination with prepreg layers in the present invention. The components are modeled using prepreg plies or tapes. However, in areas where complex features are present, discontinuously reinforced composite inserts are incorporated into the component, so that the turbine component is a combination of prepreg layers and discontinuously reinforced composite inserts. Although prepreg plies may be cut to a smaller size and included in combination with substantially full length prepreg layers and the discontinuously reinforced composite inserts, the discontinuously reinforced composite inserts are modeled into the component to replace a substantial number of the cut prepreg plies that previously were sized to provide for a change in thickness or a change in contour. Each discontinuously reinforced composite insert replaces a plurality of smaller sized prepreg plies to minimize potential lay-up induced problems. Since discontinuously reinforced composite inserts do not have the directional strength of laid up plies, modeling is required to properly ascertain regions in which the inserts can replace plies without adversely affecting the component.

The discontinuously reinforced composite insert or piece is designed and produced to minimize the number of cut fiber plies, inserted into a portion of a component to allow for a change in thickness or contour, thereby reducing the number of fiber plies that must be assembled during component lay-up. A discontinuously reinforced composite insert may include a plurality of configurations. The discontinuously reinforced composite insert may be made by cutting prepreg plies into small pieces, mixing the small pieces with a slurry of matrix material to form a paste or putty. Lengths of cut fiber or tow may be substituted for the cut plies or may be used along with and in addition to the cut plies. The paste or putty is applied during layup onto areas of the component, which previously utilized cut plies, forming an uncured insert, which cures on drying. Alternatively, the mixture can be molded and cured to form a cured insert, which is assembled into the component. Inserts made from discontinuously reinforced composite, while having properties that are not quite isotropic, nevertheless are less directional than a cured CMC lay-up. These mechanical properties are referred to herein as "substantially isotropic," since they are not quite isotropic, but are not directional either.

To form the component, a plurality of prepreg layers are provided and layed up. The discontinuously reinforced composite insert material is applied adjacent to the prepreg layers at positions. These can be positions previously occupied by the small cut plies. An assembly of prepreg layers and discontinuously reinforced composite insert material is formed. The assembly is then cured under heat and pressure to form a ceramic matrix component.

An advantage is that a turbine component can be modeled to simplify assembly, and reduce manufacturing induced problems while meeting the physical property requirements.

An advantage of the present invention is that a plurality of small, cut fabric plies can be replaced by a single discontinuously reinforced composite insert. The discontinuously reinforced composite insert can be provided as a material having substantially isotropic properties.

Another advantage of the present invention is that manufacture of an aircraft engine component can be simplified by elimination of a complex, time consuming lay-up scheme, while providing a component satisfying stress analysis requirements.

Another advantage of the present invention is that the methods result in an increase in the production rate while providing fewer components with defects.

Yet another advantage of the present invention is that the use of discontinuously reinforced composite inserts will allow for the inclusion of fine features, such as thin sections and small radii, to enable functionality and performance at higher operating temperatures.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Embodiments of the present invention will now be described, by way of example only, with reference to the accompanying drawings, in which:

Figure 1 depicts a CMC airfoil for use in a gas turbine engine.

Figure 2 depicts a prior art method for laying up the CMC airfoil of Figure 1.

Figure 3 depicts a front view of the lay-up of Figure 2.

Figure 4 depicts an insert for use in the present invention replacing the plies set forth in Figure 3.

Figure 5 depicts an airfoil of the present invention laid up with inserts and prepreg plies.

Figure 6 depicts the use of an insert of the present invention to form a portion of a corner in an airfoil having internal passageways.

Figures 7A, 7B, 7C, 7D, 7E, 7F and 7G depict the use of an insert of the present invention to replace small cut plies in several embodiments.

### DETAILED DESCRIPTION OF THE INVENTION

The present invention is directed to a method for manufacturing an aircraft engine component made of a CMC. The component comprises a plurality of substantially continuous prepreg plies that extend substantially the length of the component. At least one discontinuously reinforced composite insert is incorporated into the component, the discontinuously reinforced composite insert having substantially isotropic properties. The discontinuously reinforced composite insert may extend substantially the length of the component, but are modeled to replace a plurality of specially cut, smaller prepreg plies at contours, corners and at changes in component thickness, thereby minimizing the number of plies that must be handled during lay-up.

As used herein, a fiber means the smallest unit of fibrous material, having a high aspect ratio, having a diameter that is very small compared to its length. Fiber is used interchangeably with filament. As used herein, a tow means a bundle of continuous filaments. As used herein, matrix is an essentially homogenous material into which other materials, fibers or tows specifically, are embedded. As used herein, a prepreg-ply, or simply prepreg, means a sheet of unidirectional tow, or short lengths of discontinuous fiber impregnated with matrix material, the matrix material being in resin form, partially dried, completely dried or partially cured. As used herein, a perform is a lay-up of prepreg plies that may or may not include an additional insert, into a predetermined shape prior to curing of the prepreg plies.

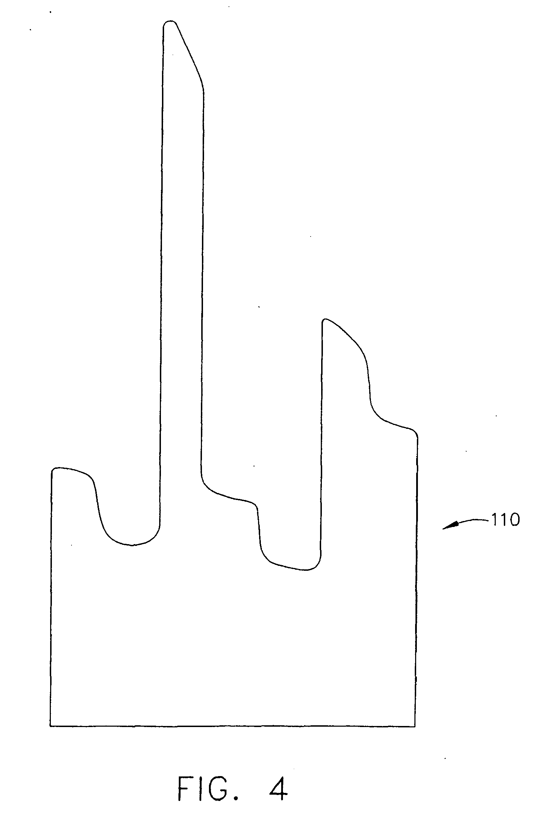

The present invention is depicted as an insert 110 in Figure 4. The depicted insert is a discontinuously reinforced composite material having substantially isotropic properties in its preferred embodiment. Substantially isotropic properties may deviate slightly from being exactly identical in all directions, but are distinguishable from anisotropic properties, which are clearly different. Anisotropic properties have mechanical properties that are distinctly different directionally at a point in a body. Stated differently, an anisotropic material has properties that are different in different directions, while an isotropic material has mechanical properties that are substantially the same in any selected direction an in any plane that includes that direction. The discontinuously reinforced composite insert is comprised of a block of material that may have a predetermined shape, and that can be handled as an individual piece. Insert 110 may be fully cured or partially cured and then machined to the predetermined shape. The discontinuously reinforced composite insert may be fully dense or partially dense. If partially dense, as will become evident, the insert can be made fully dense as part of the operations in forming a turbine engine component. The discontinuously reinforced insert is distinguishable from an insert comprised of laid-up plies, having distinct planes of isotropic material.

The insert may be formed by mixing chopped fiber with a matrix material. A variant utilizes chopped tow, chopped prepreg plies, or chopped plies that are cured or partially cured instead of or in addition to chopped fiber. Typically a coating is applied to the fiber and the coating is selected from the group consisting of boron nitride, silicon nitride, silicon carbide and combinations thereof as is known in the art. This material is thoroughly mixed with matrix material to form a slurry which, when mixed, can have a viscosity ranging from a fluid to a thick paste. After mixing, the material can be molded by any convenient molding method into a final shape or intermediate shape so that it can be readily handled. Depending on the material, it may be cured. The cured part can be final machined into a predetermined shape if necessary. If used as a paste or slurry, the material that forms the insert may be applied to areas of the preform that lacks material. In this circumstance, it may be necessary for the preform to provide support for the uncured paste or slurry. If this cannot be done, the formulation can be adjusted, as is known, with submicron powder, preferably polymer additive of carbon powder, to form a thixotropic composition that is self-supporting.

The discontinuously reinforced composite material is used in conjunction with a lay-up of plies for forming a turbine engine component. This material is assembled with the plies and maintained with the plies as the component is cured. If a fully integrated bond is desired, a number of options are available, the option to be selected depending upon ease of obtaining the desired bond. Thus, the material may be formed into an insert and may be a partially cured molded article that can bond with the plies in the lay-up for the component, the partially cured preform bonding with the resin matrix of the prepreg plies during curing of the component. The insert may be carbon rich to facilitate a diffusion bond integral with the CMC matrix portion, the integral bond formed during molten silicon infiltration via in-situ formation of silicon carbide (SiC) through chemical reaction of molten silicon infiltrant with a carbon source in the preform. Alternatively, when applied as a paste, the material can bond with the resin matrix of the prepreg plies during curing of the component.

Regardless of the method selected, the final result is a fully dense turbine engine component having at least two distinct portions, a cured reinforced ceramic matrix composite portion comprising a plurality of continuous tow extending substantially parallel to each other in a matrix, the properties being substantially anisotropic; and a discontinuously reinforced composite portion having substantially isotropic properties located at regions of contour changes and thickness changes of the component. The discontinuously reinforced composite portion comprises discontinuous fiber-including material in a matrix material. The discontinuously reinforced composite portion is adjacent to the reinforced ceramic matrix composite portion. However, the use of the insert permits the formation of very tight radii and/or forms thin sections that were not achievable with prior art plies laid up in an attempt to form the thin section. Furthermore, the formation of discontinuously reinforced composite inserts or the use of the insert material as a paste eliminates the prospect of wrinkling, and related defects as a result of handling a large number of small, thin plies. The elimination of manufacturing defects has been demonstrated by using the discontinuously reinforced composite inserts of the present invention.

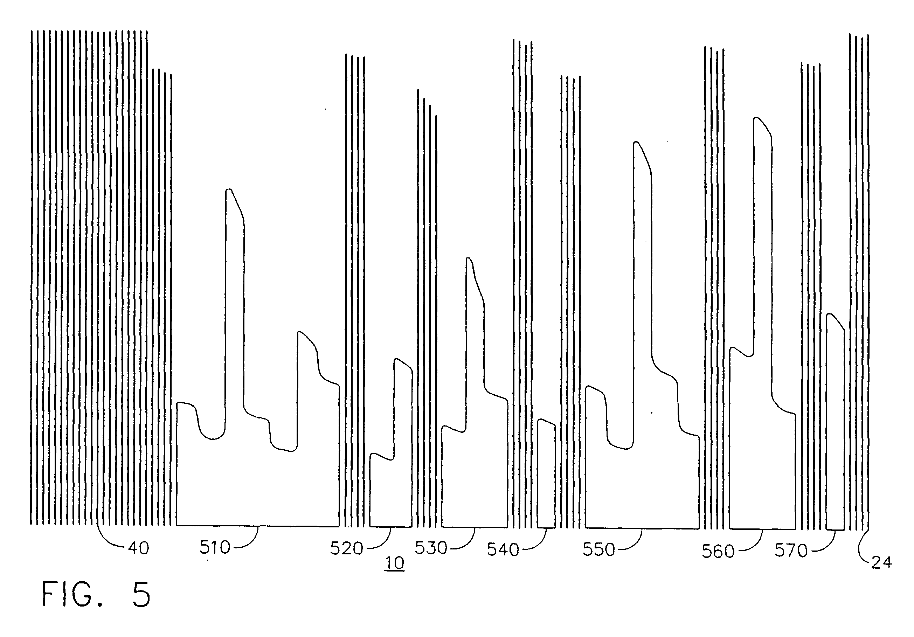

The present invention is depicted in Figure 5 as an alternate method of manufacturing the airfoil of Figure 1. In one embodiment, this invention envisions replacing root plies 41 and smaller plies 42 with a discontinuously reinforced composite insert 110. The insert 110 of Figure 4 preferably has substantially isotropic properties. An insert 110 of Figure 4 depicted in Figure 5 as 510, 520, 530, 540, 550, 560, and 570 replace the plies in Figure 3 located at B, C, D, E, F, G and H respectively. The remaining plies in the preform are inserted prior to curing. The plies extend the full length or substantially the full length of the component, the orientation of each of the plies being modeled to provide the required mechanical properties for the component, here an airfoil. Thus, a 0° orientation refers to a ply that is laid up so that the line of fiber tows is substantially parallel to a preselected plane of the component, for example the long dimension or axis of a turbine blade. A 90° orientation refers to a prepreg ply oriented at substantially 90° to the preselected plane. The remaining plies may be laid up in an altering formation, such as ± 45° to the preselected plane of the part. Thus, for example, a sequence of plies is laid up in a sequence of 0°, +45°, -45°, 90°, -45°, +45° so that the component has tensile strength in directions other than along the axis. In this manner, the strength of the component can be modified to be somewhat less than directional (anisotropic) or somewhat isotropic as desired. For the article depicted in Figure 5, the final cured component is a CMC having tows extending in preselected orientations in planes that were assembled as plies. The tows in each plane may be oriented at a preselected angle to the tows in an adjacent plane. This portion of the component will exhibit substantially anisotropic properties. However, the inserts adjacent to plies have substantially isotropic properties.

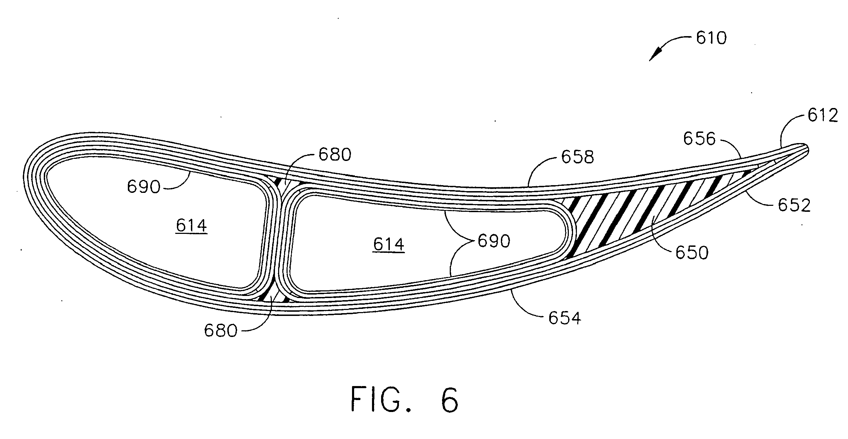

In an alternate embodiment of the present invention, the inserts are used to provide a thinner cross-section than is currently available using existing plies. Figure 6 depicts two applications of the present invention for use in a turbine blade 610 in which a portion of the thin trailing edge 612 includes a discontinuously reinforced composite insert 650 having substantially isotropic properties. The blade also includes premolded rib inserts 680, made of the discontinuously reinforced composite of the present invention.

The narrow chord turbine blade of Figure 6 depicts a pair of air passageways 614 that are fabricated into blade 610. Both the trailing edge insert 650 and rib inserts 680 are prefabricated using the discontinuous materials set forth in the present invention. Both insert 650 and inserts 680 replace a plurality of small plies that are extremely difficult to handle during lay-up operations. Inserts 650, 680 can be molded to near-net shape and machined to final dimensions after being compacted and cured to remove the volatiles. It is possible to precision mold the inserts to final dimension or to provide them as partially dense structures that are melt-infiltrated to fully dense.

As shown in Figure 6, insert 650 is positioned within the trailing edge replacing a plurality of small plies that would be required to fill the gap between plies having a first end 652 on the suction side 654 a second end 656 on the pressure side 658 of the blade. As shown in Figure 6, insert 650 is bounded by a plurality of plies that extend from the suction side 654 to the pressure side 658. As used herein full length means that the plies extend the height of the blade from top to bottom, Figure 6 being a cross-section through the height, extending into and out of the plane of Figure 6. It is envisioned that insert 650 can be made somewhat larger than shown in Figure 6, thereby allowing replacement of at least a portion of one of the full length plies. At least one full-length ply having a first end 652 and a second end 656 is required on the suction side 654 and the pressure side 658. The direction of maximum stress in each blade design is known, and the at least one ply is oriented, typically on the outside of the insert, so that its fibers run in a direction parallel to the direction of maximum stress. Each ply is of standard thickness of about 0.25 mm (10 mils), comprising a plurality of unidirectional tows. However, if additional strength is needed in directions offset from the direction of maximum stress, the inserts permit the substitution of additional plies. Preferably, these plies use thin, unidirectional tows, allowing ply thicknesses of less than 0.25 mm (10 mils), generally from 0.13 mm (5 mils) to 0.23 mm (9 mils). Although such thin plies are difficult to handle, they can be accommodated by the manufacturing process because they are full length plies that are laid up against a full length insert and used in limited numbers, replacing only one or two plies of standard thickness. Of course, in this embodiment, insert 650 is increased in size proportionally to account for the difference in ply thickness when such thin plies are substituted for plies of standard thickness.

Inserts 680 are provided solely to replace the plurality of small plies used at the change in thickness between air passages 614. As should be obvious, the lay-up of plies in this area requires many small plies having different widths that must be precisely placed. The fabrication of inserts 680 using the materials and methods of the present invention and placement of the insert during lay-up is substantially easier and less prone to manufacturing error that require scrapping of a cured blade. In fact, the use of such inserts make possible the manufacture of airfoils having complex air passageway arrangements that previously were not possible.

To manufacture a blade such as the blade depicted in Figure 6, continuous plies 652 along the suction side 654 are laid up on a lay-up tool. A mandrel (not shown) having inner wrap plies 690 is then placed at the appropriate locations as shown in Figure 6. The preformed inserts 650, 680 are then positioned at their respective locations. Alternatively, material in the form of a putty or a paste can be applied at the respective locations with excess material being removed after consolidation or curing. The outer plies extending from first end 652 on the suction side 654 to second end 656 on the pressure side 658 are wrapped over to complete the lay-up sequence. The outer matrix plies are placed over the outer surface of the insert pieces 650, 680 to enhance bonding between the insert pieces and the continuous plies. The laid up blade is then cured under pressure at temperature to remove the volatiles and to fully consolidate the blade. After consolidation and curing, the mandrel is removed to provide air passageways 614, the mandrel occupying the space of the air passageways during curing. Depending on the technique used, as discussed above, the blade can then be densified using the melt infiltration process.

### EXAMPLE 1

A slurry was prepared by utilization of SiC/SiC unidirectional prepreg tape, the tape being a coated silicon carbide tow in a silicon carbide matrix. The fibers comprising the tow typically are coated with a debond coating such as boron nitride. The backing was removed from the prepreg by exposing the fabric to liquid nitrogen. The fabric was then cut into pieces having a size of about 1.6cm² (¼ square in.) and smaller. A proprietary solution of Cotronics Resbond 931, a high temperature ceramic graphite adhesive resin available from Cotronics Corp. of Brooklyn N.Y and acetone was prepared by mixing with an equal weight of acetone. The chopped prepreg, about 3g, was added to the solution in a weight ratio of about 3:1 prepreg:solution to form a mixture. The mixture was blended by a suitable means to achieve a uniform consistency. This can be achieved by shaking, stirring, ball milling or other mixing techniques. The viscosity of the mixture can be adjusted as required consistent with its intended use by adding additional acetone or by allowing solvent to evaporate to form a putty or paste. For example, the mixture can be cast into rough form and machined into final form or cast into a preselected final form and allowed to cure. Alternatively, suitable submicron powders can be added to the mixture followed by additional blending. The paste can then be applied as previously discussed.

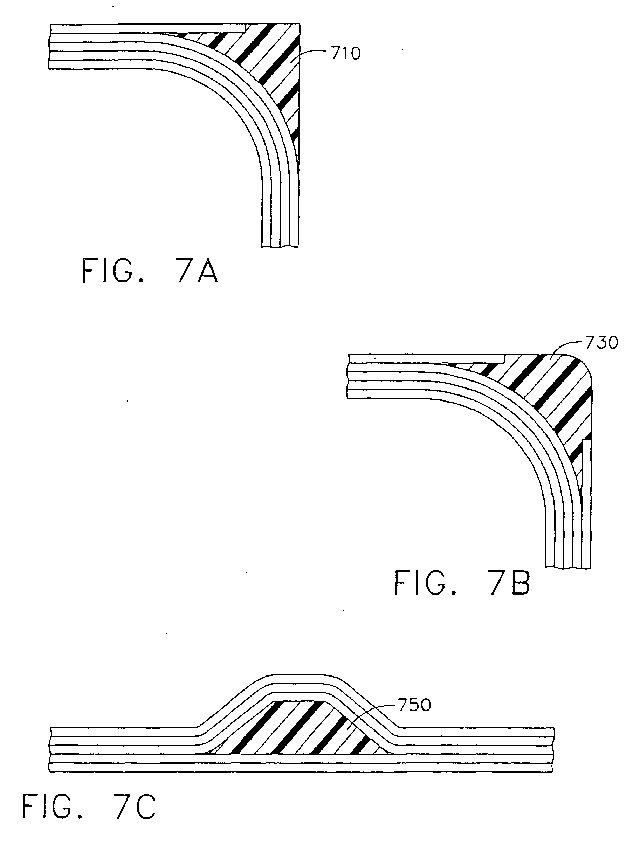

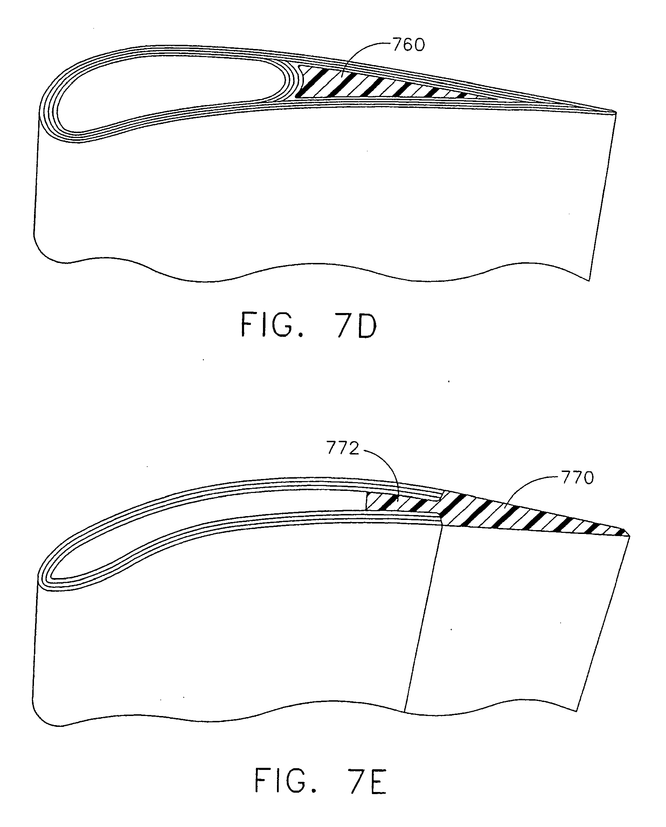

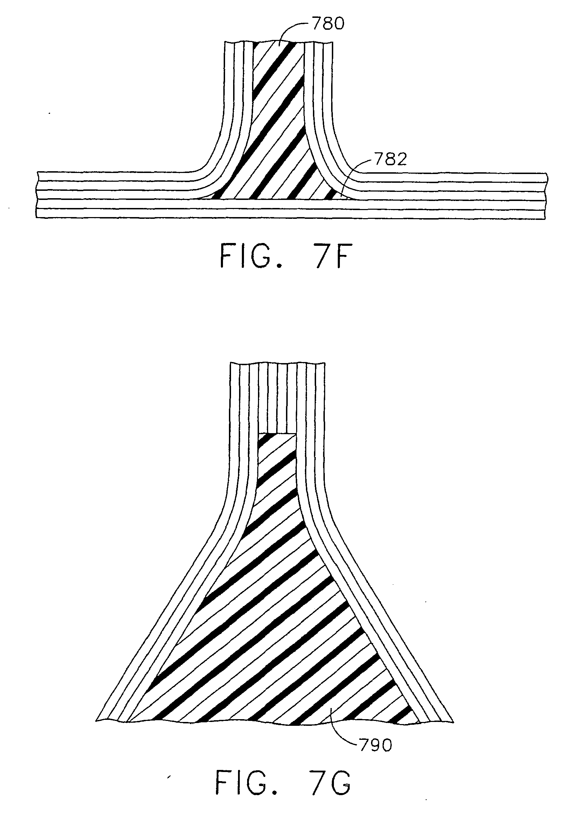

The material describe above can be used to form inserts by molding, or can be used as a paste or putty. If additional Si-C bonding is required, the material can be melt-infiltrated with Si. The present invention has been described for use in the airfoil section of a CMC turbine blade, to facilitate the manufacture of thin transitions and for air passageways in intricate airfoils that require cooling in order to survive in extreme temperature environments. However, the present invention can find use in other hot section components, such as liners, vanes, center bodies and the like, as well as other sections of the blade such as platforms and dovetails, in which small multiple plies are cut to size to account for a contour change or a thickness change, particularly over a short distance, and the substantially isotropic properties of a discontinuously reinforced ceramic insert are adequate for the application. These applications are illustrated in Figure 7. Two of the applications are outside corners. Figure 7A depicts the use of a substantially isotropic ceramic insert 710 of the present invention for use in a blade platform fillet. In such an application, the plies forming the corners are laid up on a mandrel. T insert is applied at the corner and held in place with a vacuum bag. While applying heat and pressure, the component is cured. Figure 7B depicts a similar use of the substantially isotropic ceramic insert 730 as a replacement for small multiple ceramic plies along sharp outside corners. Figure 7C depicts the use of a substantially isotropic ceramic insert 750 of the present invention as a replacement for small multiple ceramic plies for a stiffener, in which there is a large change of contour along component cross-section.

Figure 7D and 7E depict two uses for the substantially isotropic ceramic insert of the present invention in the trailing edge of an airfoil. In Figure 7D, substantially isotropic ceramic insert 760 is a trailing edge wedge that avoids a plurality of plies in the trailing edge, shown surrounded by matrix material after curing. During lay-up, the plies surrounded the precision manufactured insert, which bonded to the insert during curing. In Figure 7E, substantially isotropic ceramic insert 770 forms a sharp trailing edge insert. Insert 770 includes a dovetail 772 that bonds with the blade plies to provide strength. This arrangement allows very thin trailing edges with a sharp radiused edge.

Figure 7F and 7G depict the use of the insert to replace a plurality of small plies. In Figure 7F, the substantially isotropic ceramic insert 780 is used in a shroud rail build-up. The insert is used to replace a plurality of plies at corners 782 as well as other small plies in the build-up. In Figure 7G, substantially isotropic ceramic insert 790 is used to replace a plurality of small plies that would otherwise be required in the blade dovetail.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for producing a ceramic matrix composite component (10), comprising the steps of:
modeling a ceramic matrix component (10) that includes a combination of prepreg layers (40) and a discontinuously reinforced composite insert(650, 680),
mixing material for the discontinuously reinforced composite insert said material being selected from the group consisting of chopped fiber, chopped tow, chopped prepreg plies and chopped plies;
providing a plurality of prepreg layers;
laying up the prepreg layers;
applying the discontinuously reinforced composite insert material at contours, corners and at changes in the thickness of the component (10), adjacent to the prepreg layers;
forming an assembly of prepreg layers and discontinuously reinforced composite insert material;
curing the assembly under heat and pressure to form a ceramic matrix component.

2. The method of claim 1, wherein the discontinuously reinforced composite insert defines a thin edge.

3. The method of claim 1 or claim 2, wherein the discontinuously reinforced composite insert (650, 680) defines a trailing edge (612) of an airfoil (610).

4. The method of any one of the preceding claims, wherein the discontinuously reinforced composite insert (650, 680) defines a corner (710).

5. The method of claim 4, wherein the corner is an internal corner formed along an internal cooling passageway (614) of a turbine blade (610).

6. The method of claim 4 wherein the corner is an external corner (710) of a turbine component.

7. The method of any one of the preceding claims, wherein discontinuously reinforced composite insert (650, 680) defines a dovetail portion of an airfoil.

8. The method of any one of the preceding claims, wherein the insert defines a shroud rail build-up.

## Patentansprüche

1. Verfahren zum Herstellen einer Keramikmatrix-Verbundwerkstoffkomponente (10) mit den Schritten:
Modellieren einer Keramikmatrixkomponente (10), die eine Kombination von Prepreg-Lagen (40) und eine unzusammenhängend verstärkte Verbundwerkstoffeinlage (65, 680) enthält,
Mischen von Material für die unzusammenhängend verstärkte Verbundwerkstoffeinlage, wobei das Material aus der aus zerkleinerten Fasern, zerkleinerten Schnüren, zerkleinerten Prepreg-Lagen und zerkleinerten Lagen bestehenden Gruppe ausgewählt wird;
Bereitstellen mehrerer Prepreg-Lagen;
Auflegen der Prepreg-Lagen;
Anbringen des unzusammenhängend verstärkten Verbundwerkstoff-Einlagematerials an Konturen, Ecken und an Veränderungen in der Dicke der Komponente (10) angrenzend an den Prepreg-Lagen;
Ausbilden einer Anordnung von Prepreg-Lagen und eines unzusammenhängend verstärkten Verbundwerkstoff-Einlagematerials;
Härten der Anordnung unter Wärme und Druck zum Ausbilden einer Keramikmatrixkomponente.

2. Verfahren nach Anspruch 1, wobei die unzusammenhängend verstärkte Verbundwerkstoffeinlage eine dünne Kante definiert.

3. Verfahren nach Anspruch 1 oder Anspruch 2, wobei die unzusammenhängend verstärkte Verbundwerkstoffeinlage (650, 680) eine Hinterkante (612) eines Schaufelblattes (610) definiert.

4. Verfahren nach einem der vorstehenden Ansprüche, wobei die unzusammenhängend verstärkte Verbundwerkstoffeinlage (650, 680) eine Ecke (710) definiert.

5. Verfahren nach Anspruch 4, wobei die Ecke eine entlang eines Innenkühlkanals (614) einer Turbinenlaufschaufel (610) ausgebildete Innenecke ist.

6. Verfahren nach Anspruch 4, wobei die Ecke eine Außenecke (710) einer Turbinenkomponente ist.

7. Verfahren nach einem der vorstehenden Ansprüche, wobei die unzusammenhängend verstärkte Verbundwerkstoffeinlage (650, 680) einen Schwalbenschwanzabschnitt eines Schaufelblattes definiert.

8. Verfahren nach einem der vorstehenden Ansprüche, wobei die Einlage einen Deckbandschienenauftrag definiert.

## Revendications

1. Procédé de fabrication d'une pièce (10) en composite à matrice céramique, comportant les étapes de :
modélisation d'une pièce (10) à matrice céramique qui comprend une combinaison de couches de pré-imprégnés (40) et un élément rapporté en composite à renforcement discontinu (650, 680),
le mélange d'une matière pour l'élément rapporté composite à renforcement discontinu, ladite matière étant choisie dans le groupe comprenant les fibres hachées, l'étoupe hachée, les plis de pré-imprégnés hachés et les plis hachés ;
la réalisation d'une pluralité de couches de pré-imprégnés ;
l'empilement des couches de pré-imprégnés ;
l'application de la matière pour élément rapporté composite à renforcement discontinu sur le pourtour, dans les angles et aux changements d'épaisseur de la pièce (10), au voisinage immédiat des couches de pré-imprégnés ;
la formation d'un ensemble de couches de pré-imprégnés et de matière pour élément rapporté composite à renforcement discontinu ;
le durcissement par application de chaleur et de pression pour former une pièce à matrice céramique.

2. Procédé selon la revendication 1, dans lequel l'élément rapporté en composite à renforcement discontinu définit un bord mince.

3. Procédé selon la revendication 1 ou la revendication 2, dans lequel l'élément rapporté en composite à renforcement discontinu (650, 680) définit un bord de fuite (612) d'une pale profilée (610).

4. Procédé selon l'une quelconque des revendications précédentes, dans lequel l'élément rapporté en composite à renforcement discontinu (650, 680) définit un angle (710).

5. Procédé selon la revendication 4, dans lequel l'angle est un angle intérieur formé le long d'un passage intérieur de refroidissement (614) d'une aube mobile (610) de turbine.

6. Procédé selon la revendication 4, dans lequel l'angle est un angle extérieur (710) d'une pièce de turbine.

7. Procédé selon l'une quelconque des revendications précédentes, dans lequel l'élément rapporté en composite à renforcement discontinu (650, 680) définit une partie en queue d'aronde d'une pale profilée.

8. Procédé selon l'une quelconque des revendications précédentes, dans lequel l'élément rapporté définit une surépaisseur d'entretoise d'enveloppe.
